# EUROPEAN PATENT SPECIFICATION

(11) **EP 0 859 036 B1**
(45) Date of publication and mention of the grant of the patent: **04.08.2004**
(21) Application number: 97310714.7
(22) Date of filing: 31.12.1997
(51) Int. Cl.: C09D 11/00

(54) **Method for improving redispersibility of pigment inks for ink jet printing**
Verfahren zur Verbesserung des Redispergiervermögens von Tintenstrahltinten auf Bais von Pigment
Procédé pour améliorer la redispersibilité des encres à base de pigment pour l'impression par jet d'encre

(30) Priority: 14.02.1997 US 800775
(43) Date of publication of application: 19.08.1998
(73) Proprietor: EASTMAN KODAK COMPANY, Rochester, New York 14650 (US)
(72) Inventor: Chen, Jing-Den, Dayton, Ohio 45458 (US)
(74) Representative: Weber, Etienne Nicolas

(56) References cited:
- EP-A- 0 259 130
- EP-A- 0 718 383
- DE-A- 19 547 800

## Description

### Technical Field

The present invention relates to a method of formulating pigment inks and, more particularly, an aqueous black pigment ink for use in ink jet printers which is self-redispersible.

### Background Art

In continuous ink jet printing, ink is supplied under pressure to a manifold region that distributes the ink to a plurality of orifices, typically arranged in a linear array(s). The ink discharges from the orifices in filaments which break into droplet streams. The approach for printing with these droplet streams is to selectively charge and deflect certain drops from their normal trajectories. Graphic reproduction is accomplished by selectively charging and deflecting drops from the drop streams and depositing at least some of the drops on a print receiving medium while other of the drops strike a drop catcher device.

In the ink jet printing art, water soluble dyes are desirable for runnability. However, waterfast inks are highly desirable for producing permanent images. Decreasing the solubility of the dye increases the waterfastness, and vice versa. In the continuous ink jet industry, desire to obtain permanent ink (100% waterfastness and 100% wet rubfastness) has been in existence for some time. Although this has been achieved by some continuous ink jet manufacturers (EJ-101 ink by Elmjet, VT-16-2000 ink by Videojet and Admark Fast Black Ink by Eastman Kodak Company and Scitex Digital Printing, Inc.) all of these inks are solvent based inks. Ideally, industry would prefer an aqueous ink with permanence qualities.

Current state-of-the-art aqueous ink jet inks utilize water soluble dyes to attain acceptable redissolvability of the dried ink on the orifice plate. This redissolvability is essential for good machine runnability as well as start-up for continuous ink jet printers which do not have a separate printhead cleaning fluid mechanism.

Current dye based inks utilize dyes which are water soluble (at least with limited solubility) which affects waterfastness negatively. With dye based inks, then, there is an issue of redissolvability. A water based pigment ink on the other hand, may be able to provide waterfastness as pigments are dispersed rather than dissolved. For pigment inks, then, redispersibility, rather than redissolvability, must be achieved to have good system start-up. One common problem with the aqueous pigment ink is that it is not self-redispersible, i.e. the dried ink cannot be redispersed by the ink itself. This adversely affects the ink jet printer performance, because the ink dries out in the orifice area or inside the flow conduit after the printer has been shutdown for a period of time. The un-redispersed dried ink can clog the ink jet orifices, resulting in clogged and crooked jets. Even the un-redispersed ink outside but near the orifice can cause crooked jets, because it disturbs the meniscus of the jet coming out of the orifice.

It is seen then that it would be desirable to have an aqueous pigment ink wherein the dried ink can be redispersed by the ink itself.

EP-A-0718383 discloses an dye based ink composition for a thermal ink jet printer, comprising water, a dye and pigment particles having an average particle diameter between 0.001 µm and 10 µm. The pigment particles being present in an amount of less than 0.1% by weight.

EP-A-0259130 discloses a dye based ink for a drop on demand printer, the ink comprising an aqueous solution of a direct dye in a mixture of water and glycol wetting agents. The ink comprises a solid material finely crushed to particles of dimensions no greater than 1000Å in a concentration between 0.1 and 2% by weight. The particulate material is held in dispersion and is capable of anchoring gases dissolved in the ink.

DE-A-19547800 discloses an aqueous ink for an ink jet printer comprising a pigment dispersion and a water soluble anionic dye.

The invention provides a method of formulating modified ink jet printer inks, the method comprising the steps of, providing a carbon black pigment ink; adding a first amount of an aqueous anionic black dye to the carbon black pigment ink to create a modified ink; evaluating the modified ink for self-redispersibility; adding additional amounts of the aqueous anionic black dye to the modified ink, as needed, to create a self-redispersible modified ink for ink jet printers.

The invention also provides the use of an aqueous anionic black dye in an aqueous black pigment ink composition in order to render the composition self redispersible.

Other objects and advantages of the invention will be apparent from the following description and the appended claims.

The invention will now be described in more detail and by way of example only, with reference to the accompanying drawings, in which:
Figs. 1A and 1B illustrate a side view and a front view, respectively, of a typical ink jet print head assembly of the type in which the ink formulated in accordance with the present invention may be used; and
Figs. 2A and 2B illustrate a side view and a front view, respectively, of part of the print head assembly of Figs. 1A and 1B, showing the formation of clogged orifices and crooked jets, problems corrected by application of the ink formulated in accordance herewith.

The present invention provides for a waterfast ink composition wherein the ink comprises a carbon pigment dispersion and the otherwise non-self-redispersible carbon black pigment ink becomes self-redispersible, by the addition of an aqueous anionic black dye. The dye is selected from the group comprising direct dyes, acid dyes, reactive dyes, and food dyes. The ink jet ink composition also comprises a liquid vehicle, comprising deionized water and additives. The additives are selected from the group comprising a pH modifier, an alcohol, a glycol, a surfactant, a biocide, a corrosion inhibitor, and mixtures thereof. According to the method of the present invention then, an aqueous anionic black dye can be incorporated into a carbon black pigment ink to make the ink self-redispersible.

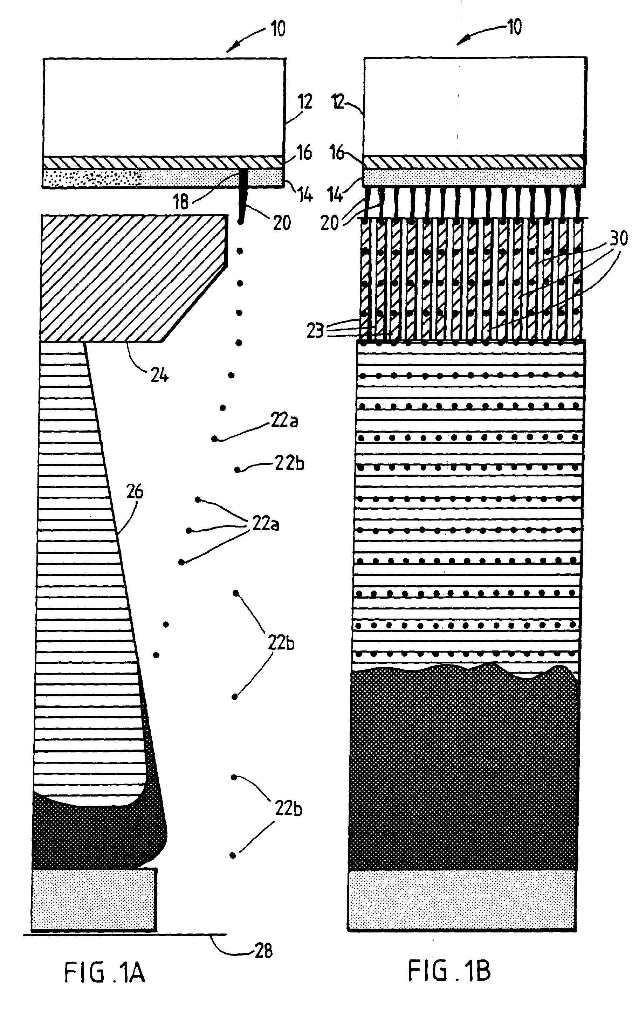

Referring now to the drawings, Fig. 1 illustrates a typical ink jet print head assembly 10, showing an array of straight ink filaments 20 exiting orifices in a direction vertical to an orifice plate 14. The trajectories of charged 22a and uncharged 22b droplets formed from each filament 20 are also illustrated. Each filament and droplets formed from the filament are aligned with each charge lead 23.

In Fig. 1, ink is pumped into a resonator 12, inside the printhead. Attached to the bottom of the resonator is orifice plate 14, spaced apart from the resonator 12 by a spacer 16. The orifice plate has a plurality of approximately evenly spaced apart orifices for dispersing ink 18. An ink pump (not shown) forces the ink 18 through the orifices in the orifice plate, and filaments of ink 20 form at each orifice. The ink filament 20 exits the orifice in a direction vertical to the orifice plate. Purposeful vibration of the resonator 12 and orifice plate 14 cause the ink filaments 20 to break into uniform droplets 22. As the droplets 22 form at the filament 20 ends, they pass a charge plate 24. The charge plate has a row of charge leads 23, one for each orifice in the orifice plate 14. The charge leads are parallel to each other and each charge lead is aligned with each orifice such that the ink filament and the normal trajectory of droplets formed thereof are almost parallel to the charge lead. The charge plate receives signals to turn on and off specific charge leads, based on bit-mapped print data. Certain of the droplets 22 receive a charge as they form, attracting those droplets, 22a, to a catcher 26. Uncharged droplets 22b fall onto a substrate 28 and create part of the printed image.

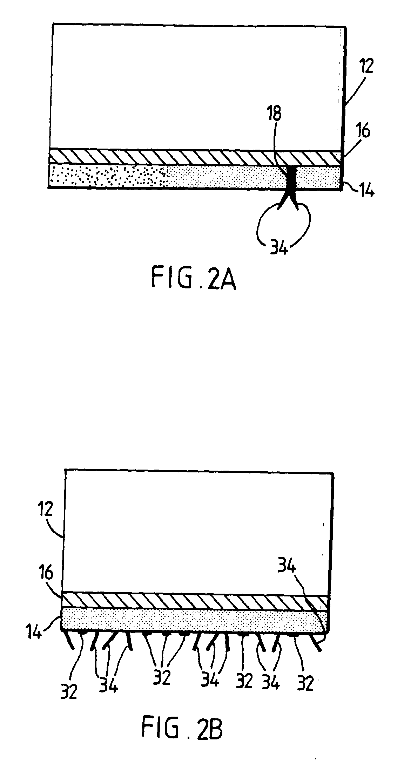

Referring now to Fig. 2, when non-redispersible ink dries out in the orifice area or inside the flow conduit after printer shutdown, this un-redispersed dried ink can clog the ink jet orifices. Rather than the ink droplets forming along paths 30 vertical to the orifice plate 14, as shown in Fig. 1B, the jets become clogged 32 and/or crooked 34, resulting, obviously, in poor printer performance. Hence, it is desirable for the ink to be redispersible, to avoid the problems illustrated in Fig. 2.

In order to evaluate the self-redispersibility of an ink, a test method has been developed in accordance with the present invention. To test the self-redispersibility of an ink, first a small ink spot is made on a weighing dish by depositing approximately 0.1 g of ink with a pippet. This is allowed to dry in ambient for approximately 24 hours. The dried ink spot is then covered with approximately 1g of the same ink. The dish is gently shaken to observe if the dried ink spot is redispersed by the ink. The ink is self-redispersible if the dried ink is redispersed and turned into liquid. If the dried ink spot or its broken pieces is not redispersed into liquid, the ink is not self-redispersible.

Experiments conducted in accordance with the present invention determined an amount of aqueous anionic black dye appropriate for making the black pigment ink self-redispersible. In the experiments below, the ink typically comprises more than 1% by weight of the liquid dye and less than 20% by weight liquid dye. In a preferred embodiment of the present invention, the liquid dye comprises about 10 % by weight of a solid dye.

A substantial number of experiments were conducted using carbon pigment inks, shown as Formulations A through I below, modified by adding varying amounts of an aqueous black dye (Formulations A1-A4; B1-B6; C1-C2; D1-D2; E1-E2; F1-F3; G1-G3; H1-H3; and I1-I4 below), to determine self-redispersibility of the modified inks. The self-redispersibility results are shown in the following examples.

### Example 1

| Formulation A | |
|---|---|
| Aqueous carbon black pigment dispersion | 24.4 wt% |
| Deionized water | 71.4 |
| Dimethylethanolamine | 1 |
| Glycerol | 3 |
| Corrosion inhibitor | 0.1 |
| Biocide | 0.1 |
| Total | 100 wt% |

| | |
|---|---|
| Formulation A1 | 99 wt% formulation A, |
| | 1 wt% liquid anionic black dye (DB19) |
| Formulation A2 | 98 wt% formulation A, |
| | 2 wt% liquid anionic black dye (DB19) |
| Formulation A3 | 97 wt% formulation A, |
| | 3 wt% liquid anionic black dye (DB19) |
| Formulation A4 | 96 wt% formulation A, |
| | 4 wt% liquid anionic black dye (DB19) |

| Formulation | Self-redispersibility test |
|---|---|
| A | Not self-redispersible, flakes of dried ink even after 30 minutes |
| A1 | Not self-redispersible, much smaller flakes after 10 minutes |
| A2-A4 | Self-redispersible in less than 5 minutes |

The aqueous carbon black pigment dispersion used in this example contains 20.49 wt% of carbon black pigment, so the carbon black pigment content in Formulation A is 5 wt%. The aqueous anionic black dye (liquid DB19 is used herein for purposes of illustration only, and is not to be considered as limiting the invention) is an aqueous solution containing 11 wt% solid Direct Black 19 dye. As shown in the table of self-redispersibility results, the dried ink of Formulation A (containing no liquid dye) cannot be redispersed by the ink itself. Many flakes of dried ink remain un-dispersed in the weighing dish even after the dried ink has been immersed with ink for 30 minutes. Some flakes are several millimeters in diameter. With the addition of 1 wt% of liquid dye (Formulation A1), the dried ink is already more dispersed by the ink itself, although pieces of dried ink of diameter less than 0.5 millimeters remain in the dish after 10 minutes. With the addition of 2 to 4 wt% of liquid dye (Formulations A2, A3, and A4), the dried ink is completely redispersed into liquid by the ink itself within 5 minutes.

### Example 2

| Formulation B | |
|---|---|
| Aqueous carbon black pigment dispersion | 23.71 wt% |
| Deionized water | 71.01 |
| Dimethylethanolamine | 2 |
| Glycerol | 3 |
| Corrosion inhibitor | 0.1 |
| Biocide | 0.1 |
| Surfactant | 0.08 |
| Total | 100.00 wt% |

| | |
|---|---|
| Formulation B1 | 95 wt% formulation B, |
| | 5 wt% liquid DB19 |
| Formulation B2 | 90 wt% formulation B, |
| | 10 wt% liquid DB19 |
| Formulation B3 | 85 wt% formulation B, |
| | 15wt% liquid DB19 |
| Formulation B4 | 80 wt% formulation B, |
| | 20 wt% liquid DB19 |
| Formulation B5 | 75 wt% formulation B, |
| | 25wt% liquid DB19 |
| Formulation B6 | 70 wt% formulation B, |
| | 30 wt% liquid DB19 |

| Formulation | Self-redispersibility test |
|---|---|
| B | Not self-redispersible, flakes of dried ink even after 20 minutes |
| B1-B6 | Self-redispersible in 5 minutes |

The aqueous carbon black pigment dispersion used in this example contains 21.09 wt% of carbon black pigment, so the carbon black pigment content in Formulation B is 5 wt%. The liquid dye (DB19) used in this example is an aqueous solution containing 11 wt% solid Direct Black 19. As shown in the results table above, the dried ink of Formulation B cannot be redispersed by the ink itself. Many flakes of dried ink remain un-dispersed in the weighing dish even after the dried ink has been immersed with ink for 20 minutes. Some flakes are as big as 2 millimeters in diameter. With the addition of 5 to 30 wt% of liquid dye (Formulations B1-B6), the dried ink is completely redispersed into liquid by the ink itself within 5 minutes.

### Example 3

| Formulation C | |
|---|---|
| Aqueous carbon black pigment dispersion | 23.71 wt% |
| Deionized water | 75.05 |
| Dimethylethanolamine | 1 |
| Corrosion inhibitor | 0.1 |
| Biocide | 0.1 |
| Surfactant | 0.04 |
| Total | 100.00 wt% |

| Formulation C1 | |
|---|---|
| Aqueous carbon black pigment dispersion | 23.71 wt% |
| Deionized water | 70.05 |
| Dimethylethanolamine | 1 |
| Corrosion inhibitor | 0.1 |
| Biocide | 0.1 |
| Surfactant | 0.04 |
| DB19 | 5 |
| Total | 100.00 wt% |

| Formulation C2 | |
|---|---|
| Aqueous carbon black pigment dispersion | 23.71 wt% |
| Deionized water | 65.05 |
| Dimethylethanolamine | 1 |
| Corrosion inhibitor | 0.1 |
| Biocide | 0.1 |
| Surfactant | 0.04 |
| DB19 | 10 |
| Total | 100.00 wt% |

| Formulation | Self-redispersibility test |
|---|---|
| C | Not self-redispersible, flakes of dried ink even after 20 minutes |
| C1 | Self-redispersible in 5 minutes |
| C2 | Self-redispersible in 2 minutes and 35 seconds |

The aqueous carbon black pigment dispersion used in this example contains 21.09 wt% of carbon black pigment, so the carbon black pigment content in the three formulations (C, C1, C2) is 5 wt%. The liquid dye (DB19) used in this example is an aqueous solution containing 12 wt% solid Direct Black 19 dye. As shown in the results table above, the dried ink of Formulation C cannot be redispersed by the ink itself. Many flakes of dried ink remain un-dispersed in the weighing dish even after the dried ink has been immersed with ink for 20 minutes. With the addition of 5 to 10 wt% of liquid dye (Formulations C1 and C2), the dried ink is completely redispersed into liquid by the ink itself within 5 minutes.

### Example 4

| Formulation D | |
|---|---|
| Aqueous carbon black pigment dispersion | 18.97 wt% |
| Deionized water | 79.79 |
| Dimethylethanolamine | 1 |
| Corrosion inhibitor | 0.1 |
| Biocide | 0.1 |
| Surfactant | 0.04 |
| Total | 100.00 wt% |

| Formulation D1 | |
|---|---|
| Aqueous carbon black pigment dispersion | 18.97 wt% |
| Deionized water | 74.79 |
| Dimethylethanolamine | 1 |
| Corrosion inhibitor | 0.1 |
| Biocide | 0.1 |
| Surfactant | 0.04 |
| DB19 | 5 |
| Total | 100.00 wt% |

| Formulation D2 | |
|---|---|
| Aqueous carbon black pigment dispersion | 18.97 wt% |
| Deionized water | 69.79 |
| Dimethylethanolamine | 1 |
| Corrosion inhibitor | 0.1 |
| Biocide | 0.1 |
| Surfactant | 0.04 |
| DB19 | 10 |
| Total | 100.00 wt% |

| Formulation | Self-redispersibility test |
|---|---|
| D | Not self-redispersible, flakes of dried ink even after 20 minutes |
| D1 | Self-redispersible in 3 minutes |
| D2 | Self-redispersible in 2 minutes and 30 seconds |

The aqueous carbon black pigment dispersion used in this example contains 21.09 wt% of carbon black pigment, so the carbon black pigment content in Formulations D, D1 and D2 is 4 wt%. The liquid DB19 used in this example is an aqueous solution containing 12 wt% solid Direct Black 19. As shown in the results table above, the dried ink of Formulation D cannot be redispersed by the ink itself. Many flakes of dried ink remain un-dispersed in the weighing dish even after the dried ink has been immersed with ink for 20 minutes. With the addition of 5 to 10 wt% of liquid dye (Formulations D1 and D2), the dried ink is completely redispersed into liquid by the ink itself within 3 minutes.

### Example 5

| Formulation E | |
|---|---|
| Aqueous carbon black pigment dispersion | 14.23 wt% |
| Deionized water | 84.53 |
| Dimethylethanolamine | 1 |
| Corrosion inhibitor | 0.1 |
| Biocide | 0.1 |
| Surfactant | 0.04 |
| Total | 100.00 wt% |

| Formulation E1 | |
|---|---|
| Aqueous carbon black pigment dispersion | 14.23 wt% |
| Deionized water | 79.53 |
| Dimethylethanolamine | 1 |
| Corrosion inhibitor | 0.1 |
| Biocide | 0.1 |
| Surfactant | 0.04 |
| DB19 | 5 |
| Total | 100.00 wt% |

| Formulation E2 | |
|---|---|
| Aqueous carbon black pigment dispersion | 14.23 wt% |
| Deionized water | 74.53 |
| Dimethylethanolamine | 1 |
| Corrosion inhibitor | 0.1 |
| Biocide | 0.1 |
| Surfactant | 0.04 |
| DB19 | 10 |
| Total | 100.00 wt% |

| Formulation | Self-redispersibility test |
|---|---|
| E | Not self-redispersible, flakes of dried ink even after 20 minutes |
| E1 | Self-redispersible in 2 minutes |
| E2 | Self-redispersible in 1 minutes and 35 seconds |

The aqueous carbon black pigment dispersion used in this example contains 21.09 wt% of carbon black pigment, so the carbon black pigment content in Formulations E, E1 and E2 is 3 wt%. The liquid DB19 used in this example is an aqueous solution containing 12 wt% solid Direct Black 19. As shown in the results table above, the dried ink of Formulation E cannot be redispersed by the ink itself. Many flakes of dried ink remain un-dispersed in the weighing dish even after the dried ink has been immersed with ink for 20 minutes. With the addition of 5 to 10 wt% of liquid dye (Formulations E1 and E2), the dried ink is completely redispersed into liquid by the ink itself within 2 minutes.

### Example 6

| Formulation F | |
|---|---|
| Aqueous carbon black pigment dispersion | 23.71 wt% |
| Deionized water | 75.05 |
| Dimethylethanolamine | 1 |
| Corrosion inhibitor | 0.1 |
| Biocide | 0.1 |
| Surfactant | 0.04 |
| Total | 100.00 wt% |

| Formulation F1 | |
|---|---|
| Aqueous carbon black pigment dispersion | 23.71 wt% |
| Deionized water | 70.05 |
| Dimethylethanolamine | 1 |
| Corrosion inhibitor | 0.1 |
| Biocide | 0.1 |
| Surfactant | 0.04 |
| Liquid DB22 | 5 |
| Total | 100.00 wt% |

| Formulation F2 | |
|---|---|
| Aqueous carbon black pigment dispersion | 23.71 wt% |
| Deionized water | 65.05 |
| Dimethylethanolamine | 1 |
| Corrosion inhibitor | 0.1 |
| Biocide | 0.1 |
| Surfactant | 0.04 |
| Liquid DB22 | 10 |
| Total | 100.00 wt% |

| Formulation F3 | |
|---|---|
| Aqueous carbon black pigment dispersion | 23.71 wt% |
| Deionized water | 60.05 |
| Dimethylethanolamine | 1 |
| Corrosion inhibitor | 0.1 |
| Biocide | 0.1 |
| Surfactant | 0.04 |
| Liquid DB22 | 15 |
| Total | 100.00 wt% |

| Formulation | Self-redispersibility test |
|---|---|
| F | Not self-redispersible, flakes of dried ink even after 20 minutes |
| F1-F3 | Self-redispersible in 8 minutes |

The aqueous carbon black pigment dispersion used in this example contains 21.09 wt% of carbon black pigment, so the carbon black pigment content in the four formulations (F, F1, F2, F3) is 5 wt%. The liquid dye (DB22) used in this example is an aqueous solution containing 10 wt% solid Direct Black 22. As shown in the results table above, the dried ink of Formulation F cannot be redispersed by the ink itself. Many flakes of dried ink remain un-dispersed in the weighing dish even after the dried ink has been immersed with ink for 20 minutes. With the addition of 5 to 15 wt% of liquid dye (Formulations F1, F2 and F3), the dried ink is completely redispersed into liquid by the ink itself within 8 minutes.

### Example 7

| Formulation G | |
|---|---|
| Aqueous carbon black pigment dispersion | 18.97 wt% |
| Deionized water | 79.79 |
| Dimethylethanolamine | 1 |
| Corrosion inhibitor | 0.1 |
| Biocide | 0.1 |
| Surfactant | 0.04 |
| Total | 100.00 wt% |

| Formulation G1 | |
|---|---|
| Aqueous carbon black pigment dispersion | 18.97 wt% |
| Deionized water | 74.79 |
| Dimethylethanolamine | 1 |
| Corrosion inhibitor | 0.1 |
| Biocide | 0.1 |
| Surfactant | 0.04 |
| Liquid DB22 | 5 |
| Total | 100.00 wt% |

| Formulation G2 | |
|---|---|
| Aqueous carbon black pigment dispersion | 18.97 wt% |
| Deionized water | 69.79 |
| Dimethylethanolamine | 1 |
| Corrosion inhibitor | 0.1 |
| Biocide | 0.1 |
| Surfactant | 0.04 |
| Liquid DB22 | 10 |
| Total | 100.00 wt% |

| Formulation G3 | |
|---|---|
| Aqueous carbon black pigment dispersion | 18.97 wt% |
| Deionized water | 64.79 |
| Dimethylethanolamine | 1 |
| Corrosion inhibitor | 0.1 |
| Biocide | 0.1 |
| Surfactant | 0.04 |
| Liquid DB22 | 15 |
| Total | 100.00 wt% |

| Formulation | Self-redispersibility test |
|---|---|
| G | Not self-redispersible, flakes of dried ink even after 20 minutes |
| G1-G3 | Self-redispersible in 5 minutes, 10 seconds |

The aqueous carbon black pigment dispersion used in this example contains 21.09 wt% of carbon black pigment, so the carbon black pigment content in Formulations G, G1, G2 and G3 is 4 wt%. The liquid DB22 used in this example is an aqueous solution containing 10 wt% solid Direct Black 22. As shown in the results table above, the dried ink of Formulation G cannot be redispersed by the ink itself. Many flakes of dried ink remain un-dispersed in the weighing dish even after the dried ink has been immersed with ink for 20 minutes. With the addition of 5 to 15 wt% of liquid dye (Formulations G1, G2, G3), the dried ink is completely redispersed into liquid by the ink itself in 5 minutes and 10 seconds.

### Example 8

| Formulation H | |
|---|---|
| Aqueous carbon black pigment dispersion | 14.23 wt% |
| Deionized water | 84.53 |
| Dimethylethanolamine | 1 |
| Corrosion inhibitor | 0.1 |
| Biocide | 0.1 |
| Surfactant | 0.04 |
| Total | 100.00 wt% |

| Formulation H1 | |
|---|---|
| Aqueous carbon black pigment dispersion | 14.23 wt% |
| Deionized water | 79.53 |
| Dimethylethanolamine | 1 |
| Corrosion inhibitor | 0.1 |
| Biocide | 0.1 |
| Surfactant | 0.04 |
| Liquid DB22 | 5 |
| Total | 100.00 wt% |

| Formulation H2 | |
|---|---|
| Aqueous carbon black pigment dispersion | 14.23 wt% |
| Deionized water | 74.53 |
| Dimethylethanolamine | 1 |
| Corrosion inhibitor | 0.1 |
| Biocide | 0.1 |
| Surfactant | 0.04 |
| DB19 | 10 |
| Total | 100.00 wt% |

| Formulation H3 | |
|---|---|
| Aqueous carbon black pigment dispersion | 14.23 wt% |
| Deionized water | 69.53 |
| Dimethylethanolamine | 1 |
| Corrosion inhibitor | 0.1 |
| Biocide | 0.1 |
| Surfactant | 0.04 |
| DB19 | 15 |
| Total | 100.00 wt% |

| Formulation | Self-redispersibility test |
|---|---|
| H | Not self-redispersible, flakes of dried ink even after 20 minutes |
| H1-H3 | Self-redispersible in 4 minutes, 10 seconds |

The aqueous carbon black pigment dispersion used in this example contains 21.09 wt% of carbon black pigment, so the carbon black pigment content in Formulations H, H1, H2, H3 is 3 wt%. The liquid DB22 used in this example is an aqueous solution containing 10 wt% solid Direct Black 22. As shown in the results table above, the dried ink of Formulation H cannot be redispersed by the ink itself. Many flakes of dried ink remain un-dispersed in the weighing dish even after the dried ink has been immersed with ink for 20 minutes. With the addition of 5 to 15 wt% of liquid dye (Formulations H1, H2, H3), the dried ink is completely redispersed into liquid by the ink itself in 4 minutes and 10 seconds.

### Example 9

| Formulation I | |
|---|---|
| Aqueous carbon black pigment dispersion | 23.71 wt% |
| Deionized water | 75.05 |
| Dimethylethanolamine | 1 |
| Corrosion inhibitor | 0.1 |
| Biocide | 0.1 |
| Surfactant | 0.04 |
| Total | 100 wt% |

| | |
|---|---|
| Formulation I1 | 99 wt% formulation I, |
| | 1 wt% liquid anionic black dye (DB168) |
| Formulation I2 | 98 wt% formulation I, |
| | 2 wt% liquid anionic black dye (DB168) |
| Formulation I3 | 95 wt% formulation I, |
| | 5 wt% liquid anionic black dye (DB168) |
| Formulation I4 | 90 wt% formulation I, |
| | 10 wt% liquid anionic black dye (DB168) |

| Formulation | Self-redispersibility test |
|---|---|
| I | Not self-redispersible, flakes of dried ink even after 30 minutes |
| I1 | Not self-redispersible, much smaller flakes after 10 minutes |
| I2-I4 | Self-redispersible in 3 minutes |

The aqueous carbon black pigment dispersion used in this example contains 21.09 wt% of carbon black pigment, so the carbon black pigment content in Formulation I is 5 wt%. The liquid DB168 used in this example is an aqueous solution containing 10 wt% solid Direct Black 168 dye. As shown in the table of self-redispersibility results, the dried ink of Formulation I (containing no liquid dye) cannot be redispersed by the ink itself. Many flakes of dried ink remain un-dispersed in the weighing dish even after the dried ink has been immersed with ink for 30 minutes. With the addition of 1 wt% of liquid dye (Formulation I1), the dried ink is already more dispersed by the ink itself after 10 minutes. With the addition of 2 to 10 wt% of liquid dye (Formulations I2, I3, and I4), the dried ink is completely redispersed into liquid by the ink itself within 3 minutes.

### Industrial Applicability and Advantages

The present invention is useful in the field of ink jet printing, and has the advantage of formulating a modified carbon pigment ink for use in ink jet printing ink which is self-redispersible. The present invention has the further advantage of improving printer performance over non-self-redispersible pigment ink.

## Claims

1. A method of formulating modified ink jet printer inks, the method comprising the steps of:
providing a carbon black pigment ink;
adding a first amount of an aqueous anionic black dye to the carbon black pigment ink to create a modified ink;
evaluating the modified ink for self-redispersibility;
adding additional amounts of the aqueous anionic black dye to the modified ink, as needed, to create a self-redispersible modified ink for ink jet printers.

2. Use of an aqueous anionic black dye in an aqueous black pigment ink composition in order to render the composition self redispersible.

3. A method as claimed in claim 1 or a use as claimed in claim 2, wherein the aqueous anionic black dye is selected from the group consisting of direct dyes, acid dyes, reactive dyes, and food dyes.

4. A method or use as claimed in claim 1, 2 or 3, wherein the aqueous anionic black dye is present in an amount of from 1 to 30 percent by weight.

5. A method or use as claimed in claim 1 to 4, wherein the aqueous anionic black dye comprises from 10 to 15 percent by weight of solid dye.

6. A method or use as claimed in any one preceding claim, wherein the liquid vehicle comprises deionized water and additives.

7. A method or use as claimed in claim 6, wherein the additives are selected from the group consisting of a pH modifier, an alcohol, a glycol, a surfactant, a biocide, a corrosion inhibitor, and mixtures thereof.

## Revendications

1. Procédé de formulation d'encres modifiées pour imprimantes à jet d'encre, ledit procédé comprenant les étapes suivantes :
fournir une encre contenant un pigment de noir de carbone ;
ajouter une première quantité d'un colorant noir anionique aqueux à l'encre contenant le pigment de noir de carbone, afin de créer une encre modifiée ;
évaluer la capacité d'auto-redispersion de l'encre modifiée ;
ajouter d'autres quantités supplémentaires de colorant noir anionique aqueux à l'encre modifiée, si nécessaire, pour créer une encre modifiée auto-redispersible pour les imprimantes à jet d'encre.

2. Utilisation d'un colorant noir anionique aqueux dans une composition d'encre noire pigmentée aqueuse, afin de rendre la composition auto-redispersible.

3. Procédé selon la revendication 1 ou utilisation selon la revendication 2, où le colorant noir anionique aqueux est choisi parmi le groupe comprenant les colorants directs, les colorants acides, les colorants réactifs et les colorants alimentaires.

4. Procédé ou utilisation selon les revendications 1, 2 ou 3, où l'on utilise une quantité de colorant noir anionique aqueux comprise entre 1 et 30% en poids.

5. Procédé ou utilisation selon les revendications 1 à 4, où le colorant noir anionique aqueux comprend de 10 à 15% en poids de colorant solide.

6. Procédé ou utilisation selon l'une quelconque des revendications précédentes, où le véhicule liquide comprend de l'eau déionisée et des additifs.

7. Procédé ou utilisation selon la revendication 6, où les additifs sont choisis parmi le groupe comprenant un agent modifiant le pH, un alcool, un glycol, un agent tensioactif, un biocide, un inhibiteur de corrosion et des mélanges de ces derniers.

## Patentansprüche

1. Verfahren zur Formulierung modifizierter Tintenstrahldruckertinten mit folgenden Schritten:
Bereitstellen einer Rußschwarzpigmenttinte,
Zugeben einer ersten Menge eines wässrigen anionischen schwarzen Farbstoffs zur Rußschwarzpigmenttinte zur Herstellung einer modifizierten Tinte,
Bewerten der modifizierten Tinte auf Selbstredispersionsvermögen,
Zugeben zusätzlicher Mengen des wässrigen, anionischen, schwarzen Farbstoffs zur modifizierten Tinte nach Bedarf, um eine selbstredispergierbare, modifizierte Tinte für Tintenstrahldrucker zu erzeugen.

2. Verwendung eines wässrigen, anionischen, schwarzen Farbstoffs in einer wässrigen, schwarzen Pigmenttintenzusammensetzung, um die Zusammensetzung selbstredispergierbar werden zu lassen.

3. Verfahren nach Anspruch 1 oder Verwendung nach Anspruch 2, worin der wässrige, anionische, schwarze Farbstoff aus der Gruppe ausgewählt ist, die aus Direktfarbstoffen, Säurefarbstoffen, Reaktivfarbstoffen und Nahrungsmittelfarbstoffen besteht.

4. Verfahren oder Verwendung nach Anspruch 1, 2 oder 3, worin der wässrige, anionische, schwarze Farbstoff in einer Menge von 1 bis 30 Gew.% vorhanden ist.

5. Verfahren oder Verwendung nach Anspruch 1 bis 4, worin der wässrige, anionische, schwarze Farbstoff 10 bis 15 Gew.% festen Farbstoff enthält.

6. Verfahren oder Verwendung nach einem der vorausgehenden Ansprüche, worin das flüssige Bindemittel entsalztes Wasser und Additive enthält.

7. Verfahren oder Verwendung nach Anspruch 6, worin die Additive aus der Gruppe wählbar sind, die aus einem pH-Modifikator, einem Alkohol, einem Glycol, einem Surfactant, einem Biozid, einem Korrosionshemmer und Mischungen darauf besteht.
